# EUROPÄISCHE PATENTSCHRIFT

(11) **EP 1 120 575 B1**
(45) Veröffentlichungstag und Bekanntmachung des Hinweises auf die Patenterteilung: **08.09.2004**
(21) Anmeldenummer: 01100470.2
(22) Anmeldetag: 09.01.2001
(51) Int. Cl.: F15D 1/02, G01F 1/684

(54) **Strömungsgleichrichter**
Flow straightener
Redresseur de flux

(30) Priorität: 26.01.2000 DE 10003365; 01.04.2000 DE 10016473
(43) Veröffentlichungstag der Anmeldung: 01.08.2001
(73) Patentinhaber: E.ON Ruhrgas AG, 45138 Essen (DE)
(72) Erfinder: Altfeld, Klaus, Dr., 44894 Bochum (DE)
(74) Vertreter: Harlacher, Mechthild

(56) Entgegenhaltungen:
- EP-A- 0 880 015
- GB-A- 1 469 648
- US-A- 5 392 815
- US-A- 5 529 093

## Beschreibung

Die Erfindung betrifft einen Strömungsgleichrichter zum Gleichrichten einer Fluidströmung in einer Rohrleitung, in der sich mindestens ein Meßgerät befindet, mit einem Gleichrichtelement, das eine Vielzahl von Öffnungen aufweist.

Bei dem Meßgerät kann es sich um ein Durchflußmeßgerät, beispielsweise um einen Turbinenradzähler, einen Wirbelzähler, eine Meßblende oder ein Ultraschallmeßgerät handeln.

Um in Rohrleitungen ein optimales Meßergebnis zu erzielen, muß die Strömung möglichst ungestört sein. Dies kann durch sehr lange Einlaufstrecken erreicht werden, wodurch sich Meßstrecken ergeben, deren Abmessungen unakzeptabel groß werden können.

Durch den Einsatz von Strömungsgleichrichtern, die die gestörte Strömung des Fluides gleichrichten, werden kompakte Meßstrecken erreicht.

Aus der Praxis sind Lochplattengleichrichter bekannt, die insbesondere Deformationen des Axialgeschwindigkeitsprofils abbauen. Solche Lochplattengleichrichtern sind z.B. in Dokument US-A-5529093 beschrieben. Das Gleichrichtelement ist als Lochplatte ausgebildet, wobei die Bohrungsdurchmesser und die Anordnung der Bohrungen sehr unterschiedlich sein können. Im Einzelfall wird die konstruktive Gestaltung der Lochplatte in Abhängigkeit vom tolerierbaren Druckverlust und der Charakteristik des gestörten Strömungsprofils gewählt.

Bei drallbehafteter Strömung haben sich in der Praxis Gleichrichter bewährt, deren Gleichrichtelement als Rohrbündel ausgebildet ist. Derartige Gleichrichter können bei relativ geringem Druckverlust den Drall der Strömung sehr effektiv abbauen. Die Deformationen des Axialgeschwindigkeitsprofils werden dagegen nur schlecht abgebaut.

Bidirektionale Meßstrecken sind solche Meßstrecken, bei denen sich die Durchflußrichtung von Zeit zu Zeit ändert oder bei denen absehbar ist, daß in der Zukunft eine Durchflußänderung stattfinden wird.

Bei einer bidirektionalen Meßstrecke, bei der Strömungsgleichrichter verwendet werden, befindet sich das Meßgerät zwischen zwei Strömungsgleichrichter, und zwar in symmetrischer Anordnung. Aus Sicherheitsgründen können auch zwei hintereinander geschaltete Meßgeräte verwendet werden.

Versuche haben gezeigt, daß es bei Verwendung von Lochplattengleichrichtem in einer bidirektionalen Meßstrecke zu Geräuschentwicklungen und dadurch insbesondere bei Ultraschallmeßgeräten zu Meßfehlern kommen kann. Diese Geräusche, die teilweise auch außerhalb des Rohres gut hörbar sind, werden durch Schwingungen in der Gassäule erzeugt. Diese Schwingungen sind nur schwer vorhersehbar und nur annäherungsweise berechenbar. Es liegt die Vermutung nahe, daß die starken Schwingungen aufgrund von Resonanzphänomenen zwischen den beiden Gleichrichtern entstehen. Da bei Strömungsgleichrichtern, deren Gleichrichtelement als Lochplatten ausgebildet ist, die Wandbereiche zwischen den Löchern einen erheblichen Teil des Strömungsquerschnittes versperren, können dort möglicherweise Druckwellen reflektiert werden, so daß je nach Reynoldszahl Resonanzen entstehen können.

Die Aufgabe der Erfindung besteht demgemäß darin, einen gattungsgemäßen Gleichrichter derart zu verbessern, daß bei dessen Verwendung in einer bidirektionalen Meßstrecke die Geräuschentwicklung vermieden wird.

Die Aufgabe wird bei einem Strömungsgleichrichter der eingangs genannten Art durch den kennzeichnenden Teil des Anspruches 1 gelöst.

In Abhängigkeit von der Strömungsrichtung wird entweder der maximale Durchströmquerschnitt freigegeben, oder der Durchströmquerschnitt teilweise verschlossen. Dies ermöglicht einen Einsatz des Strömungsgleichrichters in bidirektionalen Meßstrecken: Es werden hier Resonanzprobleme vermieden, da es aufgrund der unterschiedlichen Durchströmquerschnitte nicht zu einer nennenswerten Reflektion von Druckwellen kommt. Vorteilhaft ist weiterhin, daß der Druckverlust in bidirektionalen Meßstrecken deutlich verringert wird.

Die Auswahl der Öffnungen, die verschlossen werden, hängt vom tolerierbaren Druckverlust und der Charakteristik des gestörten Strömungsprofils ab.

Vorzugsweise ist mindestens einer Öffnung eine Schließvorrichtung zugeordnet, die bei Anströmung in eine Richtung öffnet und bei Umkehr der Strömungsrichtung schließt.

Eine vorteilhafte Ausgestaltung der Erfindung besteht darin, daß die Schließvorrichtung als Rückschlagklappe ausgebildet ist.

Alternativ dazu besteht auch die Möglichkeit, die Schließvorrichtung als Kugelschließvorrichtung auszubilden.

Vorteilhafterweise kann das Gleichrichtelement als Lochplatte oder als Rohrbündel ausgebildet sein.

Die Erfindung wird im folgenden anhand bevorzugter Ausführungsbeispiele im Zusammenhang mit der Zeichnung näher erläutert.

Die Zeichnung zeigt in:
Fig. 1 eine schematische Darstellung einer bidirektionalen Meßstrecke;
Fig. 2 eine Vorderansicht eines Lochplattengleichrichters mit dem maximalen freien Durchströmquerschnitt;
Fig. 3 eine Vorderansicht des Lochplattengleichrichters aus Fig. 2 mit einem Teil-Durchströmquerschnitt;
Fig. 4 einen Schnitt durch den Lochplattengleichrichter nach Fig. 1;
Fig. 5 einen Schnitt durch eine andere Ausführungsform eines Lochplattengleichrichters.

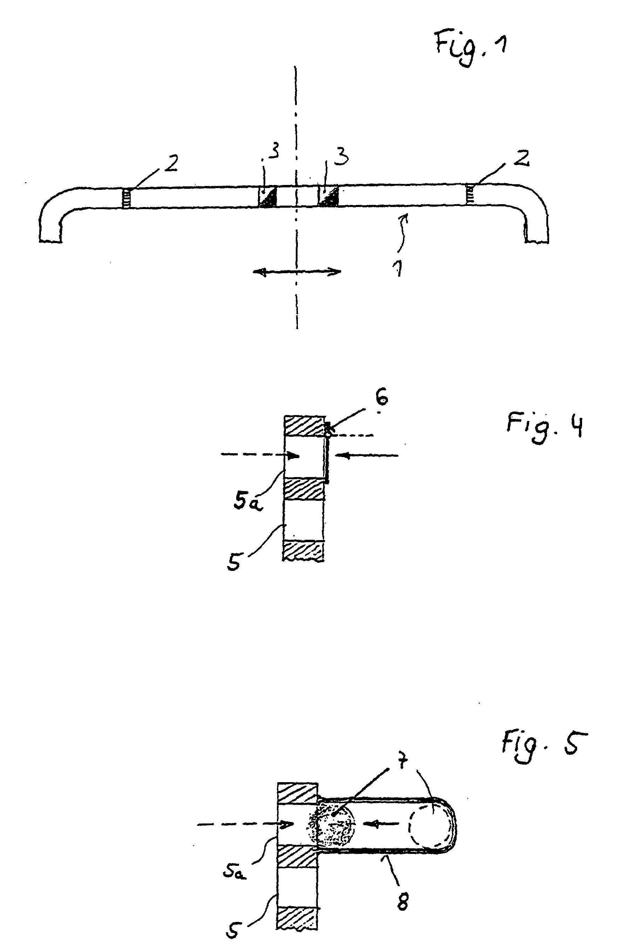

Fig. 1 zeigt eine Meßstrecke 1, in der zwischen zwei Strömungsgleichrichtern 2 zwei hintereinander geschaltete Meßgeräte 3 in Form von Ultraschallzählern angeordnet sind. Es handelt sich um eine bidirektionale Meßstrecke, die sowohl in die eine als auch in die andere Richtung durchströmt werden kann. Bei dem jeweils stromauf liegenden Strömungsgleichrichter ist ein Teil der Öffnungen verschlossen, während bei dem jeweils stromab liegenden Strömungsgleichrichter der maximale Durchströmquerschnitt freigegeben ist.

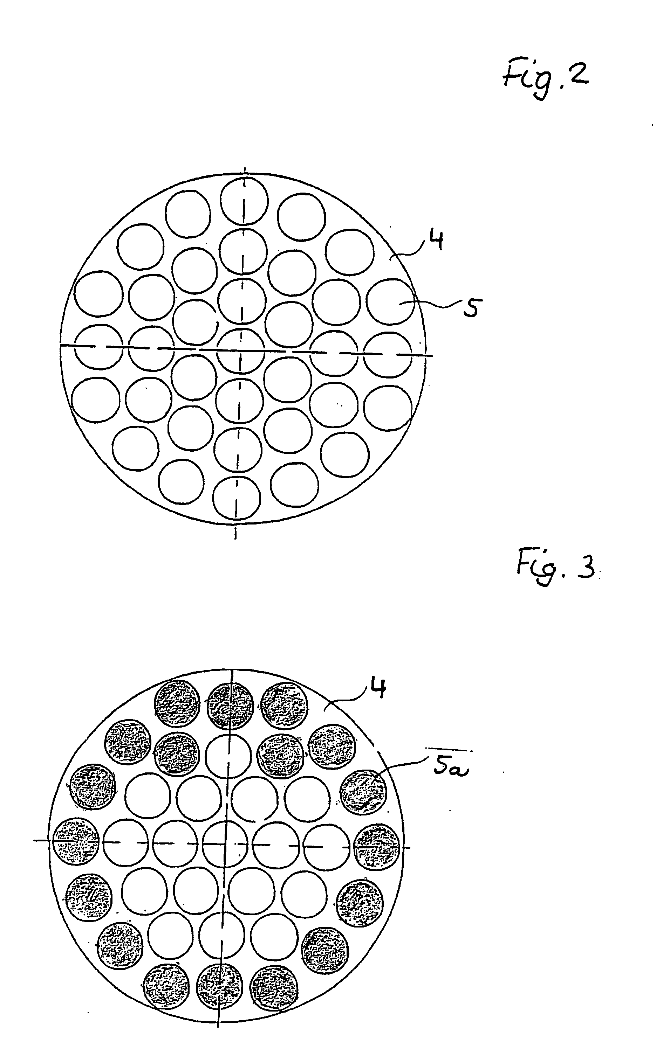

Fig. 2 zeigt ein Gleichrichterelement 4, das eine Vielzahl von gleichmäßig über den Querschnitt verteilten Öffnungen 5 aufweist. Der maximale Durchströmquerschnitt wird freigegeben, wenn alle Öffnungen durchströmt werden.

In Fig. 3 ist das Gleichrichterelement aus Fig. 2 dargestellt, wenn dieses in umgekehrter Richtung durchströmt wird. Die dunkel dargestellten Öffnungen 5a sind verschlossen. In Fig. 4 ist dargestellt, daß jede Öffnung 5a mit einer Schließvorrichtung 6 in Form einer Rückschlagklappe versehen ist, die bei Anströmung in eine Richtung schließt und in Gegenrichtung öffnet.

Bei der Ausführungsform nach Fig. 5 sind die Öffnungen 5a mit Schließvorrichtungen 6 in Form von Kugelschließvorrichtungen versehen. Eine Kugel 7 ist beweglich in einem fluiddurchgängigen Käfig 8 angeordnet und verschließt je nach Strömungsrichtung die Öffnung 5a.

## Patentansprüche

1. Strömungsgleichrichter zum Gleichrichten einer Strömung in einer Rohrleitung (1), in der sich mindestens ein Meßgerät (3) befindet, mit einem Gleichrichtelement (4), das eine Vielzahl von Öffnungen (5) aufweist, die einen freien Durchströmquerschnitt bilden,
**dadurch gekennzeichnet, daß** sich der freie Durchströmquerschnitt bei Umkehr der Strömungsrichtung ändert.

2. Strömungsgleichrichter nach Anspruch 1,
**dadurch gekennzeichnet, daß** mindestens einer Öffnung (5) eine Schließvorrichtung (6) zugeordnet ist, die bei Anströmung in eine Richtung öffnet und bei Umkehr der Strömungsrichtung schließt.

3. Strömungsgleichrichter nach Anspruch 2,
**dadurch gekennzeichnet, daß** die Schließvorrichtung (6) als Rückschlagklappe ausgebildet ist.

4. Strömungsgleichrichter nach Anspruch 2,
**dadurch gekennzeichnet, daß** die Schließvorrichtung (6) als Kugelschließvorrichtung ausgebildet ist.

5. Strömungsgleichrichter nach einem der Ansprüche 1 bis 4,
**dadurch gekennzeichnet, daß** das Gleichrichtelement (4) als Lochplatte ausgebildet ist.

6. Strömungsgleichrichter nach einem der Ansprüche 1 bis 4,
**dadurch gekennzeichnet, daß** das Gleichrichtelement (4) als Rohrbündel ausgebildet ist.

7. Bidirektionale Meßstrecke Anordnung mit zwei Strömungsgleichrichtem nach einem der Ansprüche 1-6 zwischen denen mindestens ein Meßgerät (3) angeordnet ist
**dadurch gekennzeichnet, daß** bei dem jeweils stromaufliegenden Strömungsgleichrichter der-Durchströmquerschnitt teilweise verschlossen ist und daß bei dem jeweils stromabliegenden Strömungsgleichrichter der maximale Durchströmquerschnitt freigegeben ist.

## Claims

1. Flow straightener for straightening a flow in a pipe (1) in which at least one measuring device (3) is located, with a straightening element (4) which exhibits a plurality of bores (5) which form a multiple bore cross-section through which the flow can pass, **characterised in that** the multiple bore cross-section changes when the direction of flow is reserved.

2. Flow straightener according to claim 1,
**characterised in that** a closing device (6) is assigned to at least one bore (5) which opens when the flow is in one direction and closes when the direction of flow is reversed.

3. Flow straightener according to claim 2,
**characterised in that** the closing device (6) is a non-return valve.

4. Flow straightener according to claim 2,
**characterised in that** the closing device (6) is a ball check valve.

5. Flow straightener according to any one of claims 1 through 4,
**characterised in that** the straightening element (4) is a perforated plate.

6. Flow straightener according to any one of claims 1 through 4,
**characterised in that** the flow straightening element (4) is a bundle of tubes.

7. Bi-directional metering run arrangement with two flow straighteners according to any one of claims 1 through 6 between which at least one measuring device (3) is arranged,
**characterised in that** the flow cross-section of the upstream flow straightener is in each case partly closed and that the maximum flow cross-section of the downstream flow straightener is available in each case.

## Revendications

1. Redresseur de flux pour le redressement d'un flux d'écoulement dans une conduite (1) dans laquelle se trouve au moins un appareil de mesurage (3), avec un élément redresseur (4) présentant une multitude d'orifices (5) qui forment une section libre d'écoulement, **caractérisé par le fait que** la section libre d'écoulement change en cas de renversement de la direction d'écoulement.

2. Redresseur de flux suivant la revendication 1, **caractérisé par le fait qu'**un dispositif de verrouillage (6) est attribué à au moins une orifice (5), qui en présence de flux ouvre dans une direction et qui ferme en cas de renversement de la direction d'écoulement.

3. Redresseur d'écoulement suivant la revendication 2, **caractérisé par le fait que** le dispositif de verrouillage (6) est conçu sous forme de clapet anti-retour.

4. Redresseur de flux suivant la revendication 2, **caractérisé par le fait que** le dispositif de verrouillage (6) est conçu sous forme de dispositif de verrouillage à tournant sphérique.

5. Redresseur de flux suivant l'une des revendications 1 à 4, **caractérisé par le fait que** l'élément redresseur (4) est conçu sous forme de plaque perforée.

6. Redresseur de flux suivant l'une des revendications 1 à 4, **caractérisé par le fait que** l'élément redresseur (4) est conçu sous forme de faisceau de tubes.

7. Rampe de comptage à disposition bidirectionnelle avec deux redresseurs de flux suivant l'une des revendications 1 à 6, entre lesquels est disposé au moins un appareil de mesurage (3), **caractérisé par le fait que** la section d'écoulement du redresseur de flux amont est partiellement fermée et que la section maximale d'écoulement du redresseur de flux aval est libérée.
